# EUROPÄISCHE PATENTSCHRIFT

(11) **EP 3 665 447 B1**
(45) Veröffentlichungstag und Bekanntmachung des Hinweises auf die Patenterteilung: **24.05.2023**
(21) Anmeldenummer: 18783010.4
(22) Anmeldetag: 08.10.2018
(51) Int. Cl.: G01F 23/26

(54) **VORRICHTUNG UND VERFAHREN ZUR KAPAZITIVEN MESSUNG EINES FÜLLSTANDS EINES FÜLLMEDIUMS**
DEVICE AND METHOD FOR CAPACITIVELY MEASURING A FILL LEVEL OF A FILLING MEDIUM
DISPOSITIF ET PROCÉDÉ DE MESURE CAPACITIVE D'UN NIVEAU DE REMPLISSAGE D'UN MILIEU DE REMPLISSAGE

(30) Priorität: 17.11.2017 DE 102017127145
(43) Veröffentlichungstag der Anmeldung: 17.06.2020
(73) Patentinhaber: Bedia Motorentechnik GmbH&Co. KG, 90518 Altdorf (DE)
(72) Erfinder: SCHULTHEIS, Holger, 90518 Altdorf bei Nürnberg (DE); KODL, Georg, 90471 Nürnberg (DE)
(74) Vertreter: Hafner & Kohl PartmbB
(86) Internationale Anmeldenummer: PCT/EP2018/077360
(87) Internationale Veröffentlichungsnummer: WO 2019/096493

(56) Entgegenhaltungen:
- US-A- 3 901 079
- US-A- 5 747 689
- US-A1- 2012 240 675

## Beschreibung

Die Erfindung betrifft eine Vorrichtung und ein Verfahren zur kapazitiven Messung eines Füllstands eines Füllmediums in einem mit einem Füllmedium befüllbaren Füllvolumen.

Vorrichtungen und Verfahren zur kapazitiven Messung eines Füllstands eines Füllmediums in einem mit einem Füllmedium befüllbaren Füllvolumen sind dem Grunde nach bekannt. Entsprechende Vorrichtungen bzw. Verfahren basieren auf dem Prinzip der Auswertung der sich in Abhängigkeit des Füllstands eines Füllmediums verändernden elektrischen Kapazität eines in einem mit dem Füllmedium befüllten Füllvolumen angeordneten Messelements einer Messeinrichtung.

Bisher sehen entsprechende Vorrichtungen bzw. Verfahren typischerweise vor, den zu messenden Füllstand (direkt) von der sich in Abhängigkeit des Füllstands veränderlichen elektrischen Kapazität abzuleiten. Das Füllmedium bildet dabei typischerweise das Dielektrikum eines elektrischen Kondensators, die Elektroden des Kondensators sind typischerweise durch Messelemente der Messeinrichtung gebildet. Die komplexe relative Permittivität (im Weiteren abgekürzt als Permittivität bezeichnet) des Füllmediums, deren Realteil die dielektrische Konstante des Füllmediums und deren Imaginärteil die (spezifische) elektrische Leitfähigkeit des Füllmediums widerspiegelt, muss hierbei bekannt sein, um eine Messung des Füllstands vornehmen zu können.

Um eine Füllstandsmessung auch bei unbekannter Permittivität des Füllmediums vornehmen zu können, werden bisweilen zwei Kapazitäten vorgesehen, die in verschiedener Weise von dem Füllstand und der Permittivität des Füllmediums abhängen. Mathematisch betrachtet liegen zwei linear unabhängige Systeme vor. Ein anderer Ansatz besteht darin, ein speziell für die Ermittlung der Permittivität Konstante des Füllmediums dienendes Referenzmesselement vorzusehen. Bei diesem Ansatz ist also ein weiteres Messelement vorzusehen, welches das eigentliche Messelement zur Messung des Füllstands darstellt.

Die beschriebenen Ansätze sind insbesondere deshalb verbesserungswürdig, als die hierfür erforderlichen Messeinrichtungen mehrere elektrische Kondensatoren umfassen müssen, was, insbesondere aufgrund einer erforderlichen "Entkopplung" der elektrischen Kondensatoren, regelmäßig in vergleichsweise komplex aufgebauten Messeinrichtungen resultiert. Messeinrichtungen mit Referenzmesselementen erlauben zudem oftmals nur eine begrenzte Messung zwischen einem Mindest- und einem Maximalfüllstand.

US 5 747 689 offenbart eine Vorrichtung zur kapazitiven Füllstandsmessung.

Der Erfindung liegt die Aufgabe zugrunde, eine demgegenüber verbesserte Vorrichtung zur kapazitiven Messung eines Füllstands eines Füllmediums in einem mit einem Füllmedium befüllbaren Füllvolumen anzugeben.

Die Aufgabe wird durch eine Vorrichtung gemäß Anspruch 1 gelöst. Die hierzu abhängigen Ansprüche betreffen mögliche Ausführungsformen der Vorrichtung.

Die hierin beschriebene Vorrichtung (im Weiteren kurz als "Vorrichtung" bezeichnet) dient im Allgemeinen zur kapazitiven Messung eines Füllstands eines Füllmediums in einem mit einem Füllmedium befüllbaren bzw. befüllten Füllvolumen und ist demnach zur kapazitiven Messung eines Füllstands eines Füllmediums in einem mit einem Füllmedium befüllbaren bzw. befüllten Füllvolumen eingerichtet.

Das vermittels der Vorrichtung im Hinblick auf seinen Füllstand zu messende Füllmedium kann elektrisch leitfähig oder elektrisch nicht leitfähig sein. Bei dem Füllmedium handelt es sich typischerweise, jedoch nicht zwingend um eine Flüssigkeit; der Begriff "Füllmedium" umfasst sonach grundsätzlich auch Gase sowie Festkörper.

Ein Füllmedium in Form einer Flüssigkeit kann insbesondere eine Betriebsflüssigkeit, d. h. B. ein Kraftstoff, einer Maschine, insbesondere einer Kraftmaschine, wie z. B. eines Motors, sein bzw. eine solche Betriebsflüssigkeit umfassen. Die Vorrichtung kann in diesem Fall als Füllstandssensor einer Kraftmaschine, insbesondere eines Motors, dienen und entsprechend bezeichnet bzw. erachtet werden.

Das vermittels der Vorrichtung im Hinblick auf seinen Füllstand zu messende befüllbare bzw. befüllte Füllvolumen ist typischerweise durch die geometrisch-konstruktiven Abmessungen eines das Füllvolumen aufweisenden Behälters bzw. Behältnisses definiert. Das vermittels der Vorrichtung im Hinblick auf seinen Füllstand zu messende Füllmedium befindet sich demnach in einem Behälter bzw. Behältnis. Bei einem entsprechenden Behälter bzw. Behältnis kann es sich z. B. um einen Tank handeln.

Die Vorrichtung umfasst die im Folgenden näher beschriebenen, zur Ermittlung des Füllstands miteinander zusammenwirkenden Bestandteile bzw. Komponenten:
Eine erste Komponente der Vorrichtung ist ein erstes Messelement. Das erste Messelement kann auch als erste Messelektrode bezeichnet bzw. erachtet werden. Wie sich im Weiteren ergibt, kann das erste Messelement eine erste Elektrode einer durch das erste Messelement und ein zweites Messelement der Vorrichtung gebildeten Kondensatoranordnung bilden bzw. als solche dienen. Das erste Messelement weist typischerweise elektrisch leitfähige Eigenschaften auf. Das erste Messelement ist demnach typischerweise aus einem elektrisch leitfähigen Material, wie z. B. Metall, gebildet bzw. umfasst ein elektrisch leitfähiges Material.

Eine weitere Komponente der Vorrichtung ist ein zweites Messelement. Das zweite Messelement kann auch als zweite Messelektrode bezeichnet bzw. erachtet werden. Wie sich im Weiteren ergibt, kann das zweite Messelement eine zweite Elektrode einer durch das erste Messelement und das zweite Messelement gebildeten Kondensatoranordnung bilden bzw. als solche dienen. Das zweite Messelement weist im Gegensatz bzw. im Vergleich zu dem ersten Messelement typischerweise geringere bzw. deutlich geringere elektrisch leitfähige Eigenschaften auf. Das zweite Messelement ist demnach im Gegensatz bzw. im Vergleich zu dem ersten Messelement typischerweise aus einem, insbesondere deutlich, geringer elektrisch leitfähigen Material bzw. einer, insbesondere deutlich geringer elektrisch leitfähigen, Materialstruktur gebildet bzw. umfasst ein, insbesondere deutlich, geringer elektrisch leitfähiges Material bzw. eine, insbesondere deutlich, geringer elektrisch leitfähige Materialstruktur.

Die beiden Messelemente sind im Betrieb der Vorrichtung typischerweise zumindest abschnittsweise in dem Füllvolumen angeordnet bzw. je nach Füllstand zumindest abschnittsweise in das Füllmedium eingetaucht.

Die beiden Messelemente sind typischerweise benachbart angeordnet oder ausgebildet. Die benachbarte Anordnung oder Ausbildung der beiden Messelemente ist typischerweise derart gewählt, dass das erste und das zweite Messelement eine Kondensatoranordnung bzw. einen Kondensator ausbilden. Das erste Messelement bildet dabei eine erste Elektrode der Kondensatoranordnung bzw. des Kondensators, das zweite Messelement bildet dabei eine zweite Elektrode der Kondensatoranordnung bzw. des Kondensators. Zwischen den beiden Messelementen ist ein Frei- oder Zwischenraum gebildet, welcher je nach Füllstand, d. h. füllstandsabhängig, mit dem Füllmedium befüllbar bzw. befüllt ist.

Das erste und/oder das zweite Messelement können segmentiert ausgebildet sein, d. h. mehrere das erste und/oder zweite Messelement bildende Messelementsegmente umfassen. Für den Fall, dass das erste Messelement durch mehrere das erste Messelement bildende Messelementsegmente gebildet ist bzw. mehrere das erste Messelement bildende Messelementsegmente umfasst und/oder das zweite Messelement durch mehrere das zweite Messelement bildende zweite Messelementsegmente gebildet ist bzw. mehrere das erste Messelement bildende erste Messelementsegmente umfasst, sind die jeweiligen ersten und zweiten Messelementsegmente typischerweise derart angeordnet, dass durch deren Anordnung wiederum eine Kondensatoranordnung bzw. ein Kondensator ausbildbar bzw. ausgebildet ist.

Die geometrisch-konstruktive Gestaltung des ersten Messelements und des zweiten Messelements ist mit der Maßgabe, dass das erste Messelement und das zweite Messelement eine Kondensatoranordnung bzw. einen Kondensator ausbilden, grundsätzlich frei wählbar. Typischerweise sind die beiden Messelemente jeweils länglich ausgebildet, sodass diese jeweils eine ausgezeichnete Längsachse aufweisen. Mithin sind mit der Maßgabe, dass das erste Messelement und das zweite Messelement eine Kondensatoranordnung bzw. einen Kondensator ausbilden, beliebige geometrisch-konstruktive Anordnungen des ersten und zweiten Messelements denkbar. Das erste Messelement kann z. B. plattenartig bzw. -förmig oder rohrartig bzw. -förmig ausgebildet sein. Das zweite Messelement kann z. B. plattenartig bzw. -förmig oder stabartig bzw. - förmig ausgebildet sein.

Ein z. B. plattenartig bzw. -förmig oder rohrartig bzw. -förmig ausgebildetes erstes Messelement kann einen, gegebenenfalls integralen, Bestandteil einer das erste und/oder das zweite Messelement aufnehmenden Gehäusestruktur der Vorrichtung bilden. Das z. B. plattenartig bzw. -förmig oder stabartig bzw. -förmig ausgebildete zweite Messelement kann in einer das erste und das zweite Messelement aufnehmenden Gehäusestruktur der Vorrichtung aufgenommen sein. Hierbei sind bei plattenartigen bzw. -förmigen Ausgestaltungen des ersten und zweiten Messelements z. B. parallele Anordnungen dieser denkbar. Bei rohrartigen bzw. -förmigen Ausgestaltungen des ersten Messelements und stabartigen- bzw. stabförmigen Ausgestaltungen des zweiten Messelements ist z. B. eine koaxiale Anordnung dieser denkbar.

Jeweilige Messelemente können auch durch bestimmte mehr oder weniger elektrisch leitfähige Strukturen, insbesondere auf einem Substratelement, wie einer Leiterplatte, ausgebildet sein. Elektrisch leitfähige Strukturen (erste elektrische leitfähige Strukturen) mit einer höheren elektrischen Leitfähigkeit können das erste Messelement bilden, elektrisch leitfähige Strukturen (zweite elektrisch leitfähige Strukturen) mit einer im Vergleich (deutlich) geringeren elektrischen Leitfähigkeit können das zweite Messelement bilden. In diesem Zusammenhang ist eine so genannte Interdigitalanordnung bzw. -struktur denkbar. Jeweilige erste und zweite elektrisch leitfähige Strukturen können demnach derart parallel versetzt relativ zueinander angeordnet ausgeführt sein, dass diese fingerartig ineinandergreifen. Die Anordnung jeweiliger erster und zweiter elektrisch leitfähiger Strukturen kann dabei derart gewählt sein, dass eine jeweilige erste elektrisch leitfähige Struktur zumindest abschnittsweise in den zwischen zwei (unmittelbar) benachbart angeordneten zweiten elektrisch leitfähigen Strukturen ausgebildeten Zwischenraum eingreifend angeordnet oder ausgebildet ist.

Das zweite Messelement ist derart beschaffen, dass sich (im Betrieb der Vorrichtung) ein Potentialgradient, d. h. ein Gradient eines elektrischen Potentials, zwischen einem ersten Abschnitt des zweiten Messelements, d. h. insbesondere einem ersten freien Ende des zweiten Messelements, und einem zweiten Abschnitt des zweiten Messelements, d. h. insbesondere einem dem ersten freien Ende des zweiten Messelements gegenüber liegenden zweiten freien Ende des zweiten Messelements, ausbildet. Mithin kann der erste Abschnitt des zweiten Messelements im Bereich eines ersten freien Endes des zweiten Messelements oder durch ein erstes freies Ende des zweiten Messelements gebildet sein und/oder der zweite Abschnitt des zweiten Messelements im Bereich eines zweiten freien Endes des zweiten Messelements oder durch ein zweites freies Ende des zweiten Messelements gebildet sein. Der sich zwischen den besagten Abschnitten des zweiten Messelements ausbildende Potentialgradient ist typischerweise unabhängig von dem Füllstand des Füllmediums. Der Messbereich des zweiten Messelements erstreckt sich typischerweise zwischen den besagten Abschnitten des zweiten Messelements.

Das zweite Messelement kann als Messwiderstand ausgebildet sein bzw. wenigstens einen solchen umfassen. Die Ausbildung des Potentialgradienten zwischen den besagten Abschnitten des zweiten Messelements kann demnach darauf basieren, dass das zweite Messelement als Messwiderstand ausgebildet ist bzw. wenigstens einen solchen umfasst. Der Widerstand(swert) des Messwiderstands ist so groß, dass zwischen den besagten Abschnitten des zweiten Messelements ein entsprechender Potentialgradient ausbildbar ist bzw. sich ausbildet.

Eine weitere Komponente der Vorrichtung ist eine dem zweiten Messelement zugeordnete, d. h. insbesondere elektrisch mit dem zweiten Messelement verbindbare oder verbundene, Spannungserzeugungseinrichtung. Die Spannungserzeugungseinrichtung ist eingerichtet, eine erste elektrische Spannung und eine zweite elektrische Spannung bereitzustellen bzw. zu erzeugen und an das zweite Messelement anzulegen. Zur Bereitstellung bzw. Erzeugung jeweiliger elektrischer Spannungen kann die Spannungserzeugungseinrichtung mit einer internen oder externen Spannungs(versorgungs)quelle, d. h. z. B. einem Spannungsversorgungsnetz, verbunden sein. Die erste elektrische Spannung kann (betragsmäßig) gleich der zweiten elektrischen Spannung sein. Die erste elektrische Spannung kann jedoch gegebenenfalls auch (betragsmäßig) unterschiedlich der zweiten elektrischen Spannung, oder umgekehrt, sein; mithin kann die Spannungserzeugungseinrichtung gegebenenfalls eingerichtet sein, wenigstens zwei gleiche oder unterschiedliche elektrische Spannungen zu erzeugen.

Zum Anlegen jeweiliger erster und zweiter elektrischer Spannungen an das zweite Messelement kann das zweite Messelement gesonderte Spannungsanlegebereiche, d. h. z. B. elektrische Kontakte, umfassen, an welchen die seitens der Spannungserzeugungseinrichtung bereitgestellten bzw. erzeugten elektrischen Spannungen anlegbar bzw. angelegt sind. Ein erster Spannungsanlegebereich kann durch den oder im Bereich des vorgenannten ersten Abschnitts, d. h. insbesondere im Bereich eines ersten freien Endes, des zweiten Messelements angeordnet oder ausgebildet sein, ein zweiter Spannungsanlegebereich kann durch den oder im Bereich des vorgenannten zweiten Abschnitts, d. h. insbesondere im Bereich eines zweiten freien Endes, des zweiten Messelements angeordnet oder ausgebildet sein.

Die seitens der Spannungserzeugungseinrichtung bereitgestellten bzw. erzeugten elektrischen Spannungen können jeweils in Form eines, insbesondere betragsmäßig und zeitlich, definierten Spannungsimpulses bereitgestellt bzw. erzeugt werden. Die Spannungserzeugungseinrichtung kann demnach zur Bereitstellung bzw. Erzeugung von definierten Spannungsimpulsen eingerichtet sein. Eine entsprechend eingerichtete Spannungserzeugungseinrichtung kann z. B. als Impulsgenerator ausgebildet sein bzw. einen solchen umfassen. Ein erster Spannungsimpuls kann gleich einem zweiten Spannungsimpuls sein. Ein erster elektrischer Spannungsimpuls kann jedoch gegebenenfalls auch (betragsmäßig) unterschiedlich eines zweiten elektrischen Spannungsimpulses, oder umgekehrt, sein. Mithin kann die Spannungserzeugungseinrichtung gegebenenfalls eingerichtet sein, wenigstens zwei gleiche oder unterschiedliche elektrische Spannungsimpulse zu erzeugen.

Eine weitere Komponente der Vorrichtung ist eine der Spannungserzeugungseinrichtung zugeordnete hard- und/oder softwaremäßig implementierte Steuereinrichtung. Die Steuereinrichtung kann einen hard- und/oder softwaremäßig implementierten Bestandteil der Spannungserzeugungseinrichtung bilden. Die Steuereinrichtung ist eingerichtet, den Betrieb der Spannungserzeugungseinrichtung derart zu steuern, dass die erste und zweite elektrische Spannung abwechselnd bzw. wechselweise an das zweite Messelement, d. h. insbesondere an jeweilige erste und zweite Spannungsanlegebereiche des zweiten Messelements, anlegbar ist bzw. angelegt wird. Unter einem abwechselnden bzw. wechselweisen Anlegen bzw. Anliegen der ersten und zweiten elektrischen Spannung an das zweite Messelement, d. h. an jeweilige Spannungsanlegebereiche des zweiten Messelements, ist insbesondere zu verstehen, dass abwechselnd bzw. wechselweise (betragsmäßig) definierte elektrische Spannungen bzw. Spannungsimpulse an jeweilige Spannungsanlegebereiche des zweiten Messelements angelegt werden. Dabei liegt entweder die erste Spannung an dem ersten Spannungsanlegebereich des zweiten Messelements an, während die zweite Spannung an dem zweiten Spannungsanlegebereich des zweiten Messelements anliegt, oder die zweite Spannung an dem ersten Spannungsanlegebereich des zweiten Messelements an, während die erste Spannung an dem zweiten Spannungsanlegebereich des zweiten Messelements anliegt.

Die Steuereinrichtung ist demnach eingerichtet, den Betrieb der Spannungserzeugungseinrichtung derart zu steuern, dass an dem zweiten Messelement, d. h. an jeweiligen Spannungsanlegebereichen des zweiten Messelements, abwechselnd bzw. wechselweise die erste elektrische Spannung und die zweite elektrische Spannung anliegt. An dem ersten Spannungsanlegebereich des zweiten Messelements liegt demnach in einem ersten Zeitintervall sonach die erste elektrische Spannung und in einem darauffolgenden zweiten Zeitintervall die zweite elektrische Spannung an, während an dem zweiten Spannungsanlegebereich des zweiten Messelements in dem ersten Zeitintervall die zweite elektrische Spannung und in dem darauffolgenden zweiten Zeitintervall die erste elektrische Spannung anliegt, oder umgekehrt. In einem darauffolgenden dritten Zeitintervall liegt an dem ersten Spannungsanlegebereich des zweiten Messelements wieder die erste elektrische Spannung an, während an dem zweiten Spannungsanlegebereich des zweiten Messelements wieder die zweite elektrische Spannung anliegt und so fort.

Durch eine derart konfigurierte Vorrichtung ist die Implementierung eines verbesserten Prinzips zur kapazitiven Messung eines Füllstands eines Füllmediums in einem mit einem Füllmedium befüllbaren bzw. befüllten Füllvolumen möglich. Wie sich im Weiteren ergibt, beruht das mit der Vorrichtung implementierbare Prinzip zur kapazitiven Füllstandsmessung insbesondere auf einer Erfassung und Auswertung der in Abhängigkeit des Füllstands des Füllmediums variierenden elektrischen Ladung bzw. elektrischen Kapazität zwischen dem ersten und dem zweiten Messelement, über welche auf den Füllstand des Füllmediums rückgeschlossen und dieser sonach ermittelt werden kann.

Das zweite Messelement dient dabei typischerweise als füllstandunsabhängiger Spannungsteiler, welcher einen Potentialgradienten entlang des zweiten Messelements bzw. entlang des Messbereichs des zweiten Messelements erzeugt. Die füllstandunsabhängige Spannungsteilung entlang des zweiten Messelements bzw. entlang des Messbereichs des zweiten Messelements resultiert in einer füllstandsabhängigen Gewichtung der elektrischen Ladung bzw. Kapazität zwischen dem ersten und dem zweiten Messelement. Die elektrische Ladung zwischen dem ersten und dem zweiten Messelement ist insbesondere abhängig von dem Füllstand des Füllmediums, von dem Potential entlang des Potentialgradienten sowie von der Permittivität des Füllmediums - hierunter ist, wie erwähnt, die komplexe relative Permittivität des Füllmediums, deren Realteil die dielektrische Konstante des Füllmediums und deren Imaginärteil die (spezifische) elektrische Leitfähigkeit des Füllmediums widerspiegelt, zu verstehen - welche jedoch für die vermittels der Vorrichtung zu realisierende bzw. realisierbare Ermittlung des Füllstands nicht relevant und somit vernachlässigbar ist. Die vermittels der Vorrichtung zu realisierende bzw. realisierbare Ermittlung des Füllstands ist demnach unabhängig von der Permittivität des Füllmediums, d. h. auch ohne Ermittlung der Permittivität des Füllmediums, möglich.

Die Vorrichtung kann weiterhin eine hard- und/oder softwaremäßig implementierte Messeinrichtung umfassen. Die Messeinrichtung ist zur Messung der, sich gegebenenfalls verändernden, elektrischen Ladung bzw. elektrischen Kapazität zwischen dem ersten und zweiten Messelement während des abwechselnden bzw. wechselweisen Anlegens bzw. Anliegens der ersten und zweiten elektrischen Spannung an das bzw. an dem zweite(n) Messelement, d. h. insbesondere dem jeweiligen ersten und zweiten Spannungsanlegebereich des zweiten Messelements, eingerichtet. Die Messeinrichtung ist also eingerichtet, eine erste elektrische Ladung zwischen dem ersten und zweiten Messelement während des Anliegens der ersten elektrischen Spannung an dem ersten Spannungsanlegebereich des zweiten Messelements und des Anliegens der zweiten elektrischen Spannung an dem zweiten Spannungsanlegebereich des zweiten Messelements zu messen sowie eine zweite elektrische Ladung zwischen dem ersten und zweiten Messelement während des Anliegens der zweiten elektrischen Spannung an dem ersten Spannungsanlegebereich des zweiten Messelements und des Anliegens der ersten elektrischen Spannung an dem zweiten Spannungsanlegebereich des zweiten Messelements zu messen.

Die Messeinrichtung ist typischerweise ferner eingerichtet, ein die gemessene Ladung zwischen dem ersten und dem zweiten Messelement während des abwechselnden bzw. wechselweisen Anlegens bzw. Anliegens der ersten und zweiten elektrischen Spannung an den Spannungsanlegebereichen des zweiten Messelements beschreibendes Messsignal zu erzeugen. Das Messsignal kann wenigstens zwei Teilsignale beinhalten, wobei ein erstes Teilsignal die elektrische Ladung zwischen dem ersten und zweiten Messelement während des Anliegens der ersten elektrischen Spannung an dem ersten Spannungsanlegebereich des zweiten Messelements und des Anliegens der zweiten elektrischen Spannung an dem zweiten Spannungsanlegebereich des zweiten Messelements beschreibt, und ein zweites Teilsignal die elektrische Ladung zwischen dem ersten und zweiten Messelement während des Anliegens der zweiten elektrischen Spannung an dem ersten Spannungsanlegebereich des zweiten Messelements und des Anliegens der ersten elektrischen Spannung an dem zweiten Spannungsanlegebereich des zweiten Messelements beschreibt.

Die Vorrichtung kann weiterhin eine hard- und/oder softwaremäßig implementierte Auswerteeinrichtung umfassen. Die Auswerteeinrichtung kann der Messeinrichtung zugeordnet sein. Die Auswerteeinrichtung ist zur Auswertung der gemessenen Ladung während des abwechselnden bzw. wechselweisen Anlegens bzw. Anliegens der ersten und zweiten elektrischen Spannung an das bzw. an dem zweite(n) Messelement, d. h. insbesondere jeweiligen Spannungsanlegebereichen des zweiten Messelements, bzw. zur Auswertung des besagten Messsignals im Hinblick auf den Füllstand des Füllmediums in dem Füllvolumen eingerichtet. Zur Auswertung der gemessenen Ladung bzw. des Messsignals kann die Auswerteeinrichtung eine geeignete Auswertelogik bzw. geeignete Auswertealgorithmen umfassen.

Das, wie erwähnt, typischerweise länglich ausgebildete zweite Messelement kann, wie ebenso erwähnt, als Messwiderstand ausgebildet sein bzw. wenigstens einen solchen umfassen.

Der Messwiderstand kann z. B. als ein sich, insbesondere auf einem Substratelement des zweiten Messelements, bei welchem Substratelement es sich etwa um eine Leiterplatte handeln kann, entlang der Längsachse des zweiten Messelements durchgängig erstreckend angeordnetes oder ausgebildetes Widerstandselement ausgebildet sein. Ein Ersatzschaltbild für ein erstes Messelement und ein entsprechend als Messwiderstand bzw. Widerstandselement ausgeführtes zweites Messelement stellt eine RC-Kette mit einer "unendlichen" Anzahl an RC-Gliedern dar.

Alternativ ist es auch denkbar, dass der Messwiderstand durch mehrere diskrete, entlang der bzw. einer Längsachse des zweiten Messelements auf einem Substratelement des zweiten Messelements, bei welchem Substratelement es sich, wie erwähnt, etwa um eine Leiterplatte handeln kann, angeordnete oder ausgebildete elektrisch leitfähige, insbesondere metallische, Flächenelemente ausgebildet ist, welche jeweils mit diskreten Widerstandselementen und mit den Spannungsanlegebereichen des zweiten Messelements verbunden sind. Typischerweise ist hier eine abwechselnde Anordnung entsprechender Flächenelemente und entsprechender Widerstandselemente gegeben. Ein Ersatzschaltbild für ein erstes Messelement und ein entsprechend ausgeführtes zweites Messelement stellt eine Vielzahl an diskreten kapazitiven Flächen dar, die über elektrische Widerstände verbunden sind.

Allgemein gilt sonach, dass der Messwiderstand typischerweise länglich, d. h. sich zumindest abschnittsweise in Längsrichtung des zweiten Messelements erstreckend, ausgebildet ist.

Der Messwiderstand und somit das zweite Messelement kann gleich in welcher konkreten Ausführung z. B. auch durch zumindest abschnittsweise, gegebenenfalls vollständige, Beschichtung eines Substratelements - hierbei kann es sich, wie erwähnt, um eine Leiterplatte handeln - mit einem geeigneten Material gebildet sein. Die Beschichtung kann sich (in Längsrichtung des zweiten Messelements) ununterbrochen oder unterbrochen zwischen den besagten Abschnitten des zweiten Messelements erstrecken. Die Beschichtung kann durch verschiedene, insbesondere chemische und/oder physikalische, Abscheidungs- bzw. Auftragungs- bzw. Beschichtungstechniken realisiert sein, welche einen eine Beschichtung bildenden Materialauftrag ermöglichen; lediglich beispielhaft ist auf Abscheiden, Aufdampfen oder Aufdrucken zu verweisen.

Das zweite Messelement kann (zusätzlich) zumindest abschnittsweise, insbesondere vollständig, eine eine elektrische Isolation des zweiten Messelements bildende Isolationsbeschichtung aus einem geeigneten Isolationsmaterial, hierbei kann es sich z. B. um einen Kunststoff handeln, aufweisen. Das zweite Messelement kann derart von dem Füllmedium isoliert sein; d. h. es besteht kein elektrischer Kontakt zwischen dem Füllmedium und dem zweiten Messelement. Eine durch eine entsprechende Isolationsbeschichtung herbeigeführte Isolation des zweiten Messelements ist typischerweise nur bei Verwendung der Vorrichtung mit elektrisch leitfähigen Füllmedien notwendig. Die Isolationsbeschichtung ist demnach grundsätzlich optional.

Die Erfindung betrifft neben der Vorrichtung auch eine Messbaugruppe zur kapazitiven Messung eines Füllstands eines Füllmediums in einem mit einem Füllmedium befüllbaren Füllvolumen, insbesondere für eine wie beschriebene Vorrichtung. Die Messbaugruppe umfasst ein (im Verbund mit der Vorrichtung ein zweites Messelement der Vorrichtung bildendes) Messelement, welches derart beschaffen ist, dass sich ein Potentialgradient zwischen einem ersten Abschnitt, d. h. typischerweise einem ersten Spannungsanlegebereich, des zweiten Messelements und einem zweiten Abschnitt, d. h. typischerweise einem zweitenSpannungsanlegebereich, des zweiten Messelements ausbildet; eine dem zweiten Messelement zugeordnete Spannungserzeugungseinrichtung, welche eingerichtet ist, eine erste elektrische Spannung und eine, gegebenenfalls von der ersten elektrischen Spannung verschiedene, zweite elektrische Spannung zu erzeugen und abwechselnd bzw. wechselweise an das zweite Messelement anzulegen; sowie eine der Spannungserzeugungseinrichtung zugeordnete Steuereinrichtung, welche eingerichtet ist, den Betrieb der Spannungserzeugungseinrichtung derart zu steuern, dass die erste und zweite elektrische Spannung abwechselnd bzw. wechselweise an den ersten und den zweiten Abschnitt des zweiten Messelements angelegt wird.

Die Messbaugruppe kann ferner eine Messeinrichtung, welche zur Messung der elektrischen Ladung zwischen dem ersten und zweiten Messelement während des abwechselnden bzw. wechselweisen Anliegens der ersten und zweiten elektrischen Spannung an dem ersten und dem zweiten Abschnitt des zweiten Messelements eingerichtet ist, sowie eine der Messeinrichtung zugeordnete Auswerteinrichtung, welche zur Auswertung der gemessenen elektrischen Ladung während des abwechselnden bzw. wechselweisen Anliegens der ersten und zweiten elektrischen Spannung an dem zweiten Messelemente, d. h. insbesondere an jeweilige Spannungsanlegebereiche des zweiten Messelements, im Hinblick auf den Füllstand des Füllmediums in dem Füllvolumen eingerichtet ist, umfassen.

Einzelne, mehrere oder sämtliche Bestandteile der Messbaugruppe können strukturell zu einer gesondert handhabbaren Baugruppe zusammengefasst, d. h. z. B. an oder in einem Gehäusekörper der Messbaugruppe angeordnet oder ausgebildet sein.

Sämtliche Ausführungen im Zusammenhang mit der Vorrichtung gelten analog für die Messbaugruppe.

Die Erfindung betrifft neben der Vorrichtung und der Messbaugruppe auch ein Verfahren zur kapazitiven Messung eines Füllstands eines Füllmediums in einem mit einem Füllmedium befüllbaren bzw. befüllten Füllvolumen. Das Verfahren umfasst insbesondere folgende Schritte:
- Bereitstellen eines ersten Messelements,
- Bereitstellen eines zweiten Messelements, wobei das zweite Messelement derart beschaffen ist, dass sich ein Potentialgradient zwischen einem ersten Abschnitt, insbesondere einem ersten Spannungsanlegebereich, des zweiten Messelements und einem zweiten Abschnitt, insbesondere einem zweiten Spannungsanlegebereich, des zweiten Messelements ausbildet;
- Bereitstellen bzw. Erzeugen einer ersten elektrischen Spannung und/oder einer, gegebenenfalls von der ersten elektrischen Spannung verschiedenen, zweiten elektrischen Spannung;
- abwechselndes bzw. wechselweises Anlegen der erzeugten ersten und zweiten elektrischen Spannung an den ersten und zweiten Abschnitt des zweiten Messelements,
- Messen der Ladung zwischen dem ersten und zweiten Messelement während des abwechselnden bzw. wechselweisen Anlegens bzw. Anliegens der ersten und zweiten elektrischen Spannung an das bzw. an dem zweite(n) Messelement,
- Auswerten der gemessenen Ladungen während des abwechselnden bzw. wechselweisen Anlegens bzw. Anliegens der ersten und zweiten elektrischen Spannung an das bzw. an dem zweite(n) Messelement im Hinblick auf den Füllstand des Füllmediums in dem Füllvolumen.

Das Verfahren lässt sich insbesondere mit einer wie beschriebenen Vorrichtung implementieren; sämtliche Ausführungen im Zusammenhang mit der Vorrichtung gelten analog für das Verfahren.

Die Erfindung ist anhand von Ausführungsbeispielen in den Zeichnungsfiguren näher erläutert. Dabei zeigt:
- Fig. 1, 2: je eine Prinzipdarstellung einer Vorrichtung zur kapazitiven Messung eines Füllstands in einem mit einem Füllmedium befüllbaren bzw. befüllten Füllvolumen gemäß einem Ausführungsbeispiel; und
- Fig. 3 - 6: jeweils eine Prinzipdarstellung von Messelementen gemäß einem weiteren Ausführungsbeispiel.

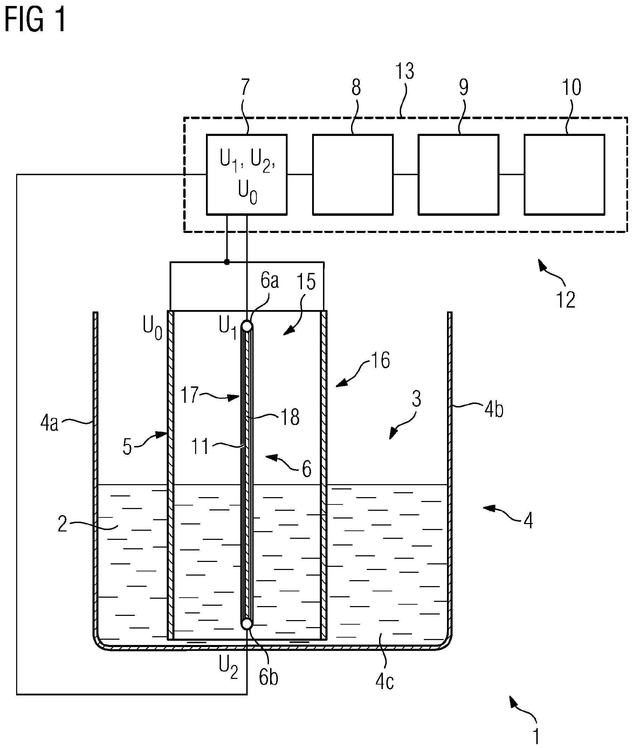

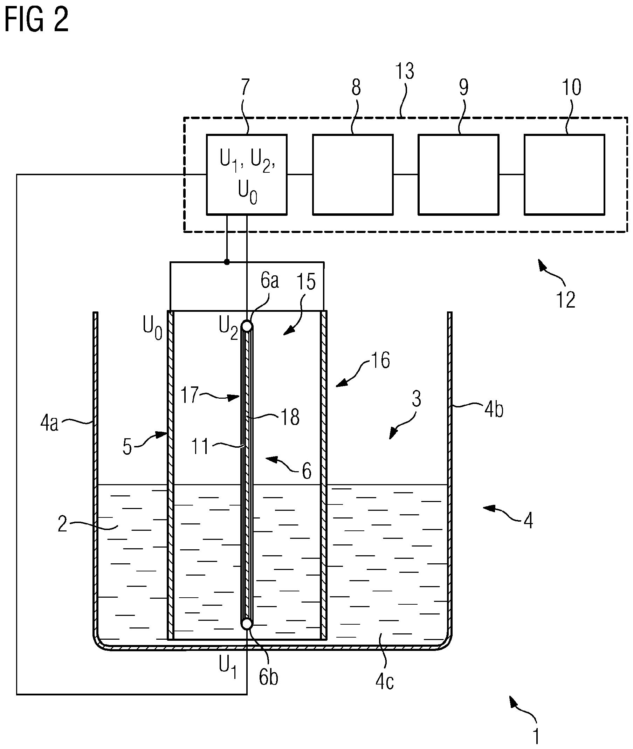

Die Fig. 1, 2 zeigen je eine Prinzipdarstellung einer Vorrichtung 1 zur kapazitiven Messung eines Füllstands in einem mit einem Füllmedium 2 befüllbaren bzw. befüllten Füllvolumen 3 gemäß einem Ausführungsbeispiel. Das Füllvolumen 3 ist durch die geometrisch-konstruktiven Abmessungen eines Behältnisses 4, d. h. insbesondere durch die Wandungen bzw. Wandungsabschnitte 4a - 4c des Behältnisses 4, gebildet.

In dem Ausführungsbeispiel handelt es sich bei dem Füllmedium 2 um eine Flüssigkeit, d. h. z. B. um einen Kraftstoff. Bei dem Behältnis 4 handelt es sich in dem Ausführungsbeispiel demnach beispielhaft um einen Tank. Die Wandungen des Behältnisses 4 sind mit 4a - 4c bezeichnet.

Die Vorrichtung 1 umfasst zwei Messelemente 5, 6, welche im Folgenden näher beschrieben sind.

Ein auch als erste Messelektrode zu bezeichnendes bzw. zu erachtendes erstes Messelement 5 ist in dem Ausführungsbeispiel beispielhaft durch eine Wandung einer Gehäusestruktur 14 der Vorrichtung 1 ausgebildet. Das erste Messelement 5 ist elektrisch leitfähig bzw. weist elektrisch leitfähige Eigenschaften auf; das erste Messelement 5 ist demnach aus einem elektrisch leitfähigen Material, wie z. B. Metall, gebildet. Das Potential des ersten Messelements 5 ist mit U₀ bezeichnet.

Ein auch als zweite Messelektrode zu bezeichnendes bzw. zu erachtendes zweites Messelement 6 ist in dem in der Fig. gezeigten Betriebszustand der Vorrichtung 1 benachbart zu dem ersten Messelement 5 angeordnet. Das zweite Messelement 6 ist demnach in einem bzw. innerhalb eines durch die Gehäusestruktur 14 der Vorrichtung 1 gebildeten Aufnahmeraum 15 aufgenommen.

Die beiden Messelemente 5, 6 sind jeweils länglich ausgebildet und parallel angeordnet, d. h. die jeweiligen Längsachsen (nicht bezeichnet) der beiden Messelemente 5, 6 sind parallel ausgerichtet.

Die beiden Messelemente 5, 6 sind ersichtlich derart benachbart angeordnet, dass die beiden Messelemente 5, 6 eine Kondensatoranordnung 16 bzw. einen Kondensator ausbilden. Das erste Messelement 5 bildet dabei eine erste Elektrode der Kondensatoranordnung 16, das zweite Messelement 6 bildet dabei eine zweite Elektrode der Kondensatoranordnung 16. Zwischen den beiden Messelementen 5, 6 ist ein Frei- oder Zwischenraum (vgl. Aufnahmeraum 15) gebildet, welcher je nach Füllstand, d. h. füllstandsabhängig, mit dem Füllmedium 2 befüllbar bzw. befüllt ist.

Ersichtlich sind die beiden Messelemente 5, 6 in dem Füllvolumen 3 angeordnet bzw. je nach Füllstand zumindest abschnittsweise in das Füllmedium 2 eingetaucht.

Das zweite Messelement 6 ist im Gegensatz bzw. im Vergleich zu dem ersten Messelement 5 (deutlich) geringer elektrisch leitfähig bzw. weist im Gegensatz zu dem ersten Messelement 5 (deutlich) geringere elektrisch leitfähige Eigenschaften auf. Das zweite Messelement 6 ist demnach im Gegensatz bzw. im Vergleich zu dem ersten Messelement 5 aus einem (deutlich) geringer elektrisch leitfähigen Material bzw. einer (deutlich) geringer elektrisch leitfähigen Materialstruktur gebildet.

Das zweite Messelement 6 kann, wie in den Fig. 1, 2 gezeigt, eine (optionale) Isolationsbeschichtung 17 aufweisen bzw. von einer solchen umgeben sein. Auf die Isolationsbeschichtung 17 kann verzichtet werden, wenn das Füllmedium 2 nicht elektrisch leitfähig ist; die Isolationsbeschichtung 17 ist damit grundsätzlich optional.

Das zweite Messelement 6 ist derart beschaffen, dass sich im Betrieb der Vorrichtung 1 ein Potentialgradient, d. h. ein Gradient eines elektrischen Potentials, zwischen einem ersten Abschnitt 6a des zweiten Messelements 6, d. h. insbesondere einem ersten freien Ende des zweiten Messelements 6, und einem zweiten Abschnitt 6b des zweiten Messelements 6, d. h. insbesondere einem dem ersten freien Ende des zweiten Messelements 6 gegenüber liegenden zweiten freien Ende des zweiten Messelements 6, ausbildet. Der erste Abschnitt 6a des zweiten Messelements 6 ist in dem in der Fig. gezeigten Ausführungsbeispiel im Bereich des ersten freien Endes des zweiten Messelements 6 bzw. durch das erste freie Ende des zweiten Messelements 6 gebildet. Der zweite Abschnitt 6b des zweiten Messelements 6 ist in dem in der Fig. gezeigten Ausführungsbeispiel im Bereich des zweiten freien Endes des zweiten Messelements 6 bzw. durch das zweite freie Ende des zweiten Messelements 6 gebildet. Der sich zwischen den besagten Abschnitten 6a, 6b des zweiten Messelements 6 ausbildende Potentialgradient ist typischerweise unabhängig von dem Füllstand des Füllmediums 2. Der Messbereich des zweiten Messelements 6 erstreckt sich zwischen den beiden Abschnitten 6a, 6b.

Das zweite Messelement 6 ist als Messwiderstand ausgebildet. Die Ausbildung des Potentialgradienten zwischen den besagten Abschnitten 6a, 6b des zweiten Messelements 6 basiert demnach darauf, dass das zweite Messelement 6 als Messwiderstand ausgebildet ist. Der Widerstand(swert) des Messwiderstands ist so groß, dass sich zwischen den besagten Abschnitten 6a, 6b des zweiten Messelements 6 ein entsprechender Potentialgradient ausbildet.

Der Messwiderstand kann als ein sich, insbesondere auf einem Substratelement 18, d. h. z. B. einer Leiterplatte, des zweiten Messelements 6 entlang Längsachse des zweiten Messelements 6 durchgängig erstreckend angeordnetes bzw. ausgebildetes Widerstandselement ausgebildet sein. Ein Ersatzschaltbild für das erste Messelement 5 und ein entsprechend als Messwiderstand bzw. Widerstandselement ausgeführtes zweites Messelement 6 stellt eine RC-Kette mit einer "unendlichen" Anzahl an RC-Gliedern dar.

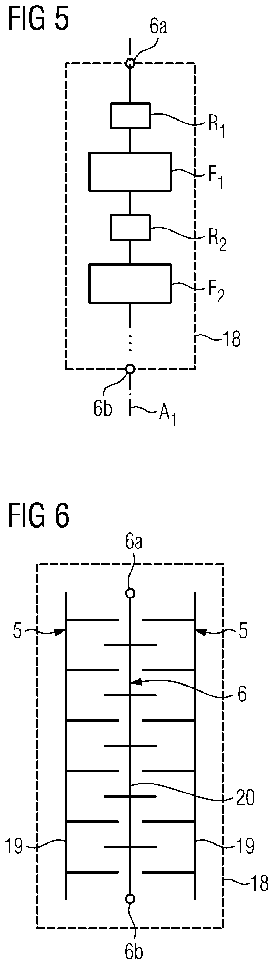

Wie sich weiter unten im Zusammenhang mit den in Fig. 5 gezeigten Ausführungsbeispiel ergibt, ist es alternativ auch denkbar, dass der Messwiderstand durch mehrere diskrete, entlang der Längsachse des zweiten Messelements 6 auf einem entsprechenden Substratelement 18 des zweiten Messelements 6 angeordnete oder ausgebildete elektrisch leitfähige, insbesondere metallische, Flächenelemente Fi - Fₙ ausgebildet ist und welche jeweils mit diskreten Widerstandselementen R₁ - Rₙ miteinander verbunden sind. Ein Ersatzschaltbild für ein erstes Messelement 5 und ein entsprechend ausgeführtes zweites Messelement 6 stellt eine Vielzahl an diskreten kapazitiven Flächen dar, die über elektrische Widerstände verbunden sind.

Der Messwiderstand und somit das zweite Messelement 6 kann gleich in welcher konkreten Ausführung durch zumindest abschnittsweise, gegebenenfalls vollständige, Beschichtung des Substratelements 18 mit einem geeigneten Material, d. h. z. B. einem Metall, gebildet sein. Die Beschichtung 11 kann sich (in Längsrichtung des zweiten Messelements) ununterbrochen oder unterbrochen zwischen den besagten Abschnitten 6a, 6b des zweiten Messelements 6 erstrecken. Die Beschichtung 11 kann durch verschiedene, insbesondere chemische und/oder physikalische, Abscheidungs- bzw. Auftragungs- bzw. Beschichtungstechniken realisiert sein, welche einen eine Beschichtung 11 bildenden Materialauftrag ermöglichen. In dem in den Fig. 1, 2 gezeigten Ausführungsbeispiel ist die den Messwiderstand bildende Beschichtung 11 beispielhaft durch eine Drucktechnik, insbesondere Siebdrucktechnik, auf das Substratelement 18 aufgebracht.

In dem in den Fig. 1, 2 gezeigten Ausführungsbeispiel weist das zweite Messelement 6 zusätzlich eine eine elektrische Isolation des zweiten Messelements 6 bildende Isolationsbeschichtung 17 aus einem geeigneten Isolationsmaterial, hierbei kann es sich z. B. um einen Kunststoff handeln, auf. Das zweite Messelement 6 ist derart von dem Füllmedium 2 isoliert; d. h. es besteht kein elektrischer Kontakt zwischen dem Füllmedium 2 und dem zweiten Messelement 6.

Die Vorrichtung 1 umfasst ferner eine dem zweiten Messelement 6 zugeordnete, d. h. insbesondere elektrisch mit dem zweiten Messelement 6 verbundene, Spannungserzeugungseinrichtung 7. Die Spannungserzeugungseinrichtung 7 ist eingerichtet, eine erste elektrische Spannung U₁ und eine zweite elektrische Spannung U₂ bereitzustellen bzw. zu erzeugen und an das zweite Messelement 6 anzulegen. Zur Bereitstellung bzw. Erzeugung jeweiliger elektrischer Spannungen U₁, U₂ kann die Spannungserzeugungseinrichtung 7 mit einer internen oder externen Spannungs(versorgungs)quelle (nicht gezeigt), d. h. z. B. einem Spannungsversorgungsnetz, verbunden sein. Die erste elektrische Spannung U₁ kann gleich der zweiten elektrischen Spannung U₂ sein. Die erste elektrische Spannung U₁ kann jedoch gegebenenfalls auch (betragsmäßig) unterschiedlich der zweiten elektrischen Spannung U₂, oder umgekehrt, sein; mithin kann die Spannungserzeugungseinrichtung 7 gegebenenfalls eingerichtet sein, wenigstens zwei gleiche oder unterschiedliche elektrische Spannungen U₁, U2 zu erzeugen.

Zum Anlegen jeweiliger erster und zweiter elektrischer Spannungen U₁, U₂ an das zweite Messelement 6 umfasst das zweite Messelement 6 gesonderte Spannungsanlegebereiche, d. h. z. B. elektrische Kontakte, an welchen die seitens der Spannungserzeugungseinrichtung 7 bereitgestellten bzw. erzeugten elektrischen Spannungen U₁, U2 anlegbar bzw. angelegt sind. Ein erster Spannungsanlegebereich ist durch den bzw. im Bereich des vorgenannten ersten Abschnitts 6a des zweiten Messelements 6 angeordnet bzw. ausgebildet, ein zweiter Spannungsanlegebereich ist durch den bzw. im Bereich des vorgenannten zweiten Abschnitts 6b des zweiten Messelements 6 angeordnet bzw. ausgebildet.

Die seitens der Spannungserzeugungseinrichtung 7 bereitgestellten bzw. erzeugten elektrischen Spannungen U₁, U₂ können jeweils in Form eines, insbesondere betragsmäßig und zeitlich, definierten Spannungsimpulses bereitgestellt bzw. erzeugt werden; die Spannungserzeugungseinrichtung 7 kann demnach zur Bereitstellung bzw. Erzeugung von definierten Spannungsimpulsen eingerichtet sein. Die entsprechend eingerichtete Spannungserzeugungseinrichtung 7 kann z. B. als Impulsgenerator ausgebildet sein. Ein erster Spannungsimpuls kann gleich einem zweiten Spannungsimpuls sein. Ein erster elektrischer Spannungsimpuls kann jedoch gegebenenfalls auch (betragsmäßig) unterschiedlich eines zweiten elektrischen Spannungsimpulses, oder umgekehrt, sein; mithin kann die Spannungserzeugungseinrichtung 7 gegebenenfalls eingerichtet sein, wenigstens zwei gleiche oder unterschiedliche elektrische Spannungsimpulse zu erzeugen.

Die Vorrichtung 1 umfasst weiterhin eine der Spannungserzeugungseinrichtung 7 zugeordnete hard- und/oder softwaremäßig implementierte Steuereinrichtung 8. Die Steuereinrichtung 8 ist eingerichtet, den Betrieb der Spannungserzeugungseinrichtung 7 derart zu steuern, dass die erste und zweite elektrische Spannung U₁, U₂ abwechselnd bzw. wechselweise an das zweite Messelement 6, d. h. den ersten und zweiten Spannungsanlegebereich des zweiten Messelements 6, angelegt wird. Unter einem abwechselnden bzw. wechselweisen Anlegen bzw. Anliegen der ersten und zweiten elektrischen Spannung U₁, U₂ an das zweite Messelement 6, d. h. an jeweilige Spannungsanlegebereiche des zweiten Messelements 6, ist insbesondere zu verstehen, dass abwechselnd bzw. wechselweise (betragsmäßig) definierte elektrische Spannungen U₁, U₂ bzw. Spannungsimpulse an jeweilige Spannungsanlegebereiche des zweiten Messelements 6 angelegt werden. Dabei liegt - wie in Fig. 1 gezeigt - entweder die erste Spannung U₁ an dem ersten Spannungsanlegebereich des zweiten Messelements 6 an, während die zweite Spannung U₂ an dem zweiten Spannungsanlegebereich des zweiten Messelements 6 anliegt, oder - wie in Fig. 2 gezeigt - die zweite Spannung U₂ an dem ersten Spannungsanlegebereich des zweiten Messelements 6 an, während die erste Spannung U₁ an dem zweiten Spannungsanlegebereich des zweiten Messelements 6 anliegt.

Die Steuereinrichtung 8 ist demnach eingerichtet, den Betrieb der Spannungserzeugungseinrichtung 7 derart zu steuern, dass an dem zweiten Messelement 6, d. h. an jeweiligen Spannungsanlegebereichen des zweiten Messelements 6, abwechselnd bzw. wechselweise die erste elektrische Spannung U₁ und die zweite elektrische Spannung U₂ anliegt. An dem ersten Spannungsanlegebereich des zweiten Messelements 6 liegt demnach in einem ersten Zeitintervall (vgl. Fig. 1) die erste elektrische Spannung U₁ und in einem darauffolgenden zweiten Zeitintervall (vgl. Fig. 2) die zweite elektrische Spannung U₂ an, während an dem zweiten Spannungsanlegebereich des zweiten Messelements 6 in dem ersten Zeitintervall (vgl. Fig. 1) die zweite elektrische Spannung U₂ und in dem darauffolgenden zweiten Zeitintervall (vgl. Fig. 2) die erste elektrische Spannung U₁ anliegt. In einem darauffolgenden dritten Zeitintervall liegt an dem ersten Spannungsanlegebereich des zweiten Messelements 6 wieder die erste elektrische Spannung U₁ an, während an dem zweiten Spannungsanlegebereich des zweiten Messelements 6 wieder die zweite elektrische Spannung U₂ anliegt und so fort.

Das mit der Vorrichtung 1 implementierbare Prinzip zur kapazitiven Füllstandsmessung basiert insbesondere auf einer Erfassung und Auswertung der in Abhängigkeit des Füllstands des Füllmediums 2 variierenden elektrischen Ladung bzw. elektrischen Kapazität zwischen dem ersten und dem zweiten Messelement 5, 6, über welche auf den Füllstand des Füllmediums 2 rückgeschlossen und dieser sonach ermittelt werden kann.

Das zweite Messelement 6 dient dabei typischerweise als füllstandsunabhängiger Spannungsteiler, welcher einen Potentialgradienten entlang des zweiten Messelements 6 bzw. entlang des Messbereichs des zweiten Messelements 6 erzeugt. Die füllstandsunabhängige Spannungsteilung entlang des zweiten Messelements 6 bzw. entlang des Messbereichs des zweiten Messelements 6 resultiert in einer füllstandsabhängigen Gewichtung der elektrischen Ladung bzw. Kapazität zwischen dem ersten und dem zweiten Messelement 5, 6. Die elektrische Ladung zwischen dem ersten und dem zweiten Messelement 5, 6 ist demnach insbesondere abhängig von dem Füllstand des Füllmediums 2, von dem Potential entlang des Potentialgradienten sowie von der Permittivität des Füllmediums 2, welche jedoch für die vermittels der Vorrichtung 1 realisierbare Ermittlung des Füllstands nicht relevant und somit vernachlässigbar ist. Die vermittels der Vorrichtung 1 realisierbare Ermittlung des Füllstands ist demnach unabhängig von der Permittivität des Füllmediums 2 möglich.

Die Vorrichtung 1 umfasst weiterhin eine hard- und/oder softwaremäßig implementierte Messeinrichtung 9. Die Messeinrichtung 9 ist zur Messung der, sich gegebenenfalls verändernden, elektrischen Ladung bzw. elektrischen Kapazität zwischen dem ersten und zweiten Messelement 5, 6 während des abwechselnden bzw. wechselweisen Anlegens bzw. Anliegens der ersten und zweiten elektrischen Spannung U₁, U₂ an den Spannungsanlegebereichen des zweiten Messelements 6, eingerichtet. Die Messeinrichtung 9 ist also eingerichtet, eine erste elektrische Ladung zwischen dem ersten und zweiten Messelement 5, 6 während des Anliegens der ersten elektrischen Spannung U₁ an dem ersten Spannungsanlegebereich des zweiten Messelements 6 und des Anliegens der zweiten elektrischen Spannung U₂ an dem zweiten Spannungsanlegebereich des zweiten Messelements 6 zu messen sowie eine zweite elektrische Ladung zwischen dem ersten und zweiten Messelement 5, 6 während des Anliegens der zweiten elektrischen Spannung U₂ an dem ersten Spannungsanlegebereich des zweiten Messelement 6 und des Anliegens der ersten elektrischen Spannung U₁ an dem zweiten Spannungsanlegebereich des zweiten Messelements 6 zu messen.

Die Messeinrichtung 9 ist ferner eingerichtet, ein die gemessene Ladung zwischen dem ersten und dem zweiten Messelement 5, 6 während des abwechselnden bzw. wechselweisen Anlegens bzw. Anliegens der ersten und zweiten elektrischen Spannung U₁, U₂ an den Spannungsanlegebereichen des zweiten Messelements 6 beschreibendes Messsignal zu erzeugen. Das Messsignal kann wenigstens zwei Teilsignale beinhalten, wobei ein erstes Teilsignal die elektrische Ladung zwischen dem ersten und zweiten Messelement 5, 6 während des Anliegens der ersten elektrischen Spannung U₁ an dem ersten Spannungsanlegebereich des zweiten Messelements 6 und des Anliegens der zweiten elektrischen Spannung U₂ an dem zweiten Spannungsanlegebereich des zweiten Messelements 6 beschreibt, und ein zweites Teilsignal die elektrische Ladung zwischen dem ersten und zweiten Messelement 5, 6 während des Anliegens der zweiten elektrischen Spannung U₂ an dem ersten Spannungsanlegebereich des zweiten Messelements 6 und des Anliegens der ersten elektrischen Spannung U₁ an dem zweiten Spannungsanlegebereich des zweiten Messelements 6 beschreibt.

Der Messeinrichtung 9 ist eine hard- und/oder softwaremäßig implementierte Auswerteeinrichtung 10 zugeordnet. Die Auswerteeinrichtung 10 ist zur Auswertung der gemessenen Ladung während des abwechselnden bzw. wechselweisen Anlegens bzw. Anliegens der ersten und zweiten elektrischen Spannung U1, U2 an das bzw. an dem zweite(n) Messelement 6, d. h. insbesondere jeweiligen Spannungsanlegebereichen des zweiten Messelements 6, bzw. zur Auswertung des besagten Messsignals im Hinblick auf den Füllstand des Füllmediums 2 in dem Füllvolumen 3 eingerichtet. Zur Auswertung der gemessenen Ladung bzw. des Messsignals kann die Auswerteeinrichtung 10 eine geeignete Auswertelogik bzw. geeignete Auswertealgorithmen umfassen.

In den Fig. 1, 2 ist ferner eine Messbaugruppe 12 zur kapazitiven Messung eines Füllstands eines Füllmediums 2 in einem mit einem Füllmedium 2 befüllbaren Füllvolumen 3 gezeigt. Die Messbaugruppe 12 umfasst das zweite Messelement 6 der Vorrichtung 1 bildende Messelement 6, die dem zweiten Messelement 6 zugeordnete Spannungserzeugungseinrichtung 7, die Steuereinrichtung 8, die Messeinrichtung 9 sowie die Auswerteeinrichtung 10.

Einzelne, mehrere oder sämtliche Bestandteile der Messbaugruppe 12 können - wie durch den strichliert dargestellten Kasten 13 angedeutet - strukturell zu einer gesondert handhabbaren Baugruppe zusammengefasst, d. h. z. B. an oder in einem Gehäusekörper (nicht gezeigt) der Messbaugruppe 12 angeordnet oder ausgebildet sein.

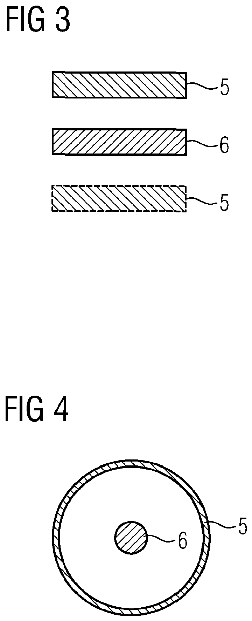

In dem in den Fig. 1, 2 gezeigten Ausführungsbeispiel ist das erste Messelement 5 und das zweite Messelement 6 jeweils plattenartig bzw. -förmig ausgebildet. Eine querschnittliche Ansicht der Messelemente 5, 6 bzw. deren Anordnung ist in Fig. 3, welche eine Prinzipdarstellung eines Ausführungsbeispiels einer entsprechenden Kondensatoranordnung 16 zeigt, dargestellt. Das in Fig. 3 untere erste Messelement 5 ist, weil optional, strichliert gezeichnet.

Anhand der Fig. 4 - 6 sind weitere Ausführungsbeispiele von ersten und zweiten Messelementen 5, 6 bzw. durch diese gebildeten Kondensatoranordnungen 16 gezeigt:
Fig. 4 zeigt wiederum in einer querschnittlichen Ansicht z. B. eine koaxiale Anordnung der Messelemente 5, 6. Die koaxiale Anordnung der Messelemente 5, 6 resultiert aus einer rohrartig bzw. -förmigen Ausbildung des ersten Messelements 5 und einer stabartig bzw. - förmigen Ausbildung des zweiten Messelements 6.

Die bereits erwähnte Fig. 5 zeigt in einer rein schematischen Prinzipdarstellung die Ausbildung des zweiten Messelements 6 durch mehrere diskrete, entlang der Längsachse A1 des zweiten Messelements 6 auf einem entsprechenden Substratelement 18 des zweiten Messelements 6 angeordnete bzw. ausgebildete elektrisch leitfähige, insbesondere metallische, Flächenelemente F₁ - Fₙ, welche jeweils mit diskreten Widerstandselementen R₁ - Rₙ verbunden sind. Ersichtlich ergibt sich eine abwechselnde Anordnung aus entsprechenden Flächenelementen F₁ - Fₙ und Widerstandselementen R₁ - Rₙ. Anhand von Fig. 5 ist demnach ersichtlich, dass das zweite Messelement 6 auch segmentiert ausgebildet sein kann, d. h. mehrere das zweite Messelement 6 bildende Messelementsegmente, nämlich in Form entsprechender Flächenelemente F₁ - Fₙ und Widerstandselemente R₁ - Rₙ, umfassen kann.

Anhand des in Fig. 6 gezeigten Ausführungsbeispiels, welches eine Aufsicht auf eine Kondensatoranordnung 16 zeigt, ist ersichtlich, dass die Messelemente 5, 6 auch durch bestimmte mehr oder weniger elektrisch leitfähige Strukturen auf einem Substratelement 18, wie einer Leiterplatte, ausgebildet sein können. Elektrisch leitfähige Strukturen (erste elektrische leitfähige Strukturen 19) mit einer höheren elektrischen Leitfähigkeit bilden das erste Messelement 5, elektrisch leitfähige Strukturen (zweite elektrisch leitfähige Strukturen 20) mit einer im Vergleich (deutlich) geringeren elektrischen Leitfähigkeit bilden das zweite Messelement 6. In diesem Zusammenhang ist in Fig. 6 eine so genannte Interdigitalanordnung bzw. -struktur gezeigt. Jeweilige erste und zweite elektrisch leitfähige Strukturen 19, 20 sind demnach derart parallel versetzt relativ zueinander angeordnet ausgeführt, dass diese fingerartig ineinandergreifen. Die Anordnung jeweiliger erster und zweiter elektrisch leitfähiger Strukturen 19, 20 ist dabei derart gewählt, dass jeweilige erste elektrisch leitfähige Strukturen 19 zumindest abschnittsweise in zwischen zwei (unmittelbar) benachbart angeordneten zweiten elektrisch leitfähigen Strukturen 20 ausgebildete Zwischenräume eingreifend angeordnet bzw. ausgebildet sind.

Mit der in den Fig. gezeigten Vorrichtung 1 bzw. der Messbaugruppe 12 lässt sich ein Verfahren zur kapazitiven Messung eines Füllstands eines Füllmediums 2 in einem mit einem Füllmedium 2 befüllbaren bzw. befüllten Füllvolumen 3 implementieren.

Das Verfahren umfasst insbesondere folgende Schritte:
- Bereitstellen eines ersten Messelements 5,
- Bereitstellen eines zweiten Messelements 6, wobei das zweite Messelement 6 derart beschaffen ist, dass sich ein Potentialgradient zwischen einem ersten Abschnitt 6a des zweiten Messelements 6 und einem zweiten Abschnitt 6b des zweiten Messelements 6 ausbildet;
- Bereitstellen bzw. Erzeugen einer ersten elektrischen Spannung U₁ und einer, gegebenenfalls von der ersten elektrischen Spannung U₁ verschiedenen, zweiten elektrischen Spannung U₂;
- abwechselndes bzw. wechselweises Anlegen der erzeugten ersten und zweiten elektrischen Spannung U₁, U₂ an den ersten und zweiten Abschnitt 6a, 6b des zweiten Messelements 6,
- Messen der Ladung zwischen dem ersten und zweiten Messelement 5, 6 während des abwechselnden bzw. wechselweisen Anlegens bzw. Anliegens der ersten und zweiten elektrischen Spannung U₁, U₂ an das zweite Messelement 6,
- Auswerten der gemessenen Ladungen während des abwechselnden bzw. wechselweisen Anlegens bzw. Anliegens der ersten und zweiten elektrischen Spannung U₁, U₂ an das zweite Messelement 6 im Hinblick auf den Füllstand des Füllmediums 2 in dem Füllvolumen 3.

## Patentansprüche

1. Vorrichtung (1) zur kapazitiven Messung eines Füllstands eines Füllmediums (2) in einem mit einem Füllmedium befüllbaren Füllvolumen (3), umfassend:
- ein erstes Messelement (5),
- ein angeordnetes zweites Messelement (6), wobei das zweite Messelement (6) derart beschaffen ist, dass sich ein Potentialgradient zwischen einem ersten Abschnitt (6a) des zweiten Messelements (6) und einem zweiten Abschnitt (6b) des zweiten Messelements (6) ausbildet; **gekennzeichnet durch**
- eine dem zweiten Messelement (6) zugeordnete Spannungserzeugungseinrichtung (7), welche eingerichtet ist, eine erste elektrische Spannung (U₁) und eine, gegebenenfalls von der ersten elektrischen Spannung (U₁) verschiedene, zweite elektrische Spannung (U₂) zu erzeugen und an das zweite Messelement (6) anzulegen;
- eine der Spannungserzeugungseinrichtung (7) zugeordnete Steuereinrichtung (8), welche eingerichtet ist, den Betrieb der Spannungserzeugungseinrichtung (7) derart zu steuern, dass die erste und zweite elektrische Spannung (U₁, U₂) wechselweise an den ersten und den zweiten Abschnitt (6a, 6b) des zweiten Messelements (6) angelegt wird.

2. Vorrichtung nach Anspruch 1, **gekennzeichnet durch** eine Messeinrichtung (9), welche zur Messung der elektrischen Ladung zwischen dem ersten und zweiten Messelement (5, 6) während des wechselweisen Anliegens der ersten und zweiten elektrischen Spannung (U₁, U₂) an den ersten und den zweiten Abschnitt (6a, 6b) des zweiten Messelements (6) eingerichtet ist.

3. Vorrichtung nach Anspruch 2, **gekennzeichnet durch** eine der Messeinrichtung (9) zugeordnete Auswerteinrichtung (10), welche zur Auswertung der gemessenen elektrischen Ladung während des wechselweisen Anliegens der ersten und zweiten elektrischen Spannung (U₁, U₂) an den ersten und den zweiten Abschnitt (6a, 6b) des zweiten Messelements (6) im Hinblick auf den Füllstand des Füllmediums (2) in dem Füllvolumen (3) eingerichtet ist.

4. Vorrichtung nach einem der vorhergehenden Ansprüche, **dadurch gekennzeichnet, dass** das erste Messelement (5) und das zweite Messelement (6) benachbart angeordnet sind, wobei das erste Messelement (5) und das zweite Messelement (6) eine Kondensatoranordnung ausbilden.

5. Vorrichtung nach einem der vorhergehenden Ansprüche, **dadurch gekennzeichnet, dass** das erste Messelement (5) plattenartig bzw. -förmig oder rohrartig bzw. -förmig ausgebildet ist und das zweite Messelement (6) plattenartig bzw. -förmig oder stabartig bzw. -förmig ausgebildet ist.

6. Vorrichtung nach einem der vorhergehenden Ansprüche, **dadurch gekennzeichnet, dass** das zweite Messelement (6) als ein Messwiderstand ausgebildet ist oder wenigstens einen solchen umfasst.

7. Vorrichtung nach Anspruch 6, **dadurch gekennzeichnet, dass** der Messwiderstand als ein sich, insbesondere auf einem Substratelement (18) des zweiten Messelements (6), entlang einer Längsachse des zweiten Messelements (6) durchgängig erstreckend angeordnetes oder ausgebildetes Widerstandselement ausgebildet ist.

8. Vorrichtung nach Anspruch 6, **dadurch gekennzeichnet, dass** der Messwiderstand durch mehrere diskrete, entlang einer Längsachse des zweiten Messelements (6) auf einem Substratelement (18) des zweiten Messelements (6) angeordnete oder ausgebildet Widerstandselemente ausgebildet ist.

9. Vorrichtung nach einem der vorhergehenden Ansprüche, **dadurch gekennzeichnet, dass** das zweite Messelement (6) zumindest abschnittsweise, insbesondere vollständig, eine eine elektrische Isolation des zweiten Messelements (6) bildende Isolationsbeschichtung (17) aus einem Isolationsmaterial aufweist.

10. Vorrichtung nach einem der vorhergehenden Ansprüche, **dadurch gekennzeichnet, dass** der erste Abschnitt (6a) des zweiten Messelements (6) im Bereich eines ersten freien Endes des zweiten Messelements (6) oder durch ein erstes freies Ende des zweiten Messelements (6) gebildet ist und der zweite Abschnitt (6b) des zweiten Messelements (6) im Bereich eines zweiten freien Endes des zweiten Messelements (6) oder durch ein zweites freies Ende des zweiten Messelements (6) gebildet ist.

11. Vorrichtung nach einem der vorhergehenden Ansprüche, **dadurch gekennzeichnet, dass** durch den oder im Bereich des ersten Abschnitts (6a) des zweiten Messelements (6) ein erster Spannungsanlegebereich des zweiten Messelements (6) ausgebildet ist und durch den oder im Bereich des zweiten Abschnitts (6b) des zweiten Messelements (6) ein zweiter Spannungsanlegebereich des zweiten Messelements (6) ausgebildet ist.

12. Messbaugruppe (12) zur kapazitiven Messung eines Füllstands eines Füllmediums (2) in einem mit einem Füllmedium (2) befüllbaren Füllvolumen (3) umfassend eine Vorrichtung (1) nach einem der vorhergehenden Ansprüche.

13. Verfahren zur kapazitiven Messung eines Füllstands eines Füllmediums (2) in einem mit einem Füllmedium (2) befüllbaren Füllvolumen (3), umfassend die Schritte:
- Bereitstellen eines ersten Messelements (5),
- Bereitstellen eines zweiten Messelements (6), wobei das zweite Messelement (6) derart beschaffen ist, dass sich ein Potentialgradient zwischen einem ersten Abschnitt (6a) des zweiten Messelements (6) und einem zweiten Abschnitt (6b) des zweiten Messelements (6) ausbildet;
- Bereitstellen bzw. Erzeugen einer ersten elektrischen Spannung (U₁) und einer, gegebenenfalls von der ersten elektrischen Spannung (U₁) verschiedenen, zweiten elektrischen Spannung (U₂) ;
- wechselweises Anlegen der erzeugten ersten und zweiten elektrischen Spannung (U₁, U₂) an den ersten und zweiten Abschnitt (6a, 6b) des zweiten Messelements (6),
- Messen der elektrischen Ladung zwischen dem ersten und zweiten Messelement (5, 6) während des wechselweisen Anlegens bzw. Anliegens der ersten und zweiten elektrischen Spannung (U₁, U₂) an das zweite Messelement (6),
- Auswerten der gemessenen elektrischen Ladungen während des wechselweisen Anlegens bzw. Anliegens der ersten und zweiten elektrischen Spannung (U₁, U₂) an das bzw. an dem zweiten Messelement (6) im Hinblick auf den Füllstand des Füllmediums (2) in dem Füllvolumen (3).

14. Verfahren nach Anspruch 13, **dadurch gekennzeichnet, dass** das Verfahren mit einer Vorrichtung (1) nach einem der Ansprüche 1 bis 11 durchgeführt wird.

## Claims

1. Device (1) for capacitive measurement of a filling level of a filling medium (2) in a filling volume (3) which can be filled with a filling medium, comprising:
- a first measuring element (5),
- an arranged second measuring element (6), wherein the second measuring element (6) is formed such that a potential gradient is formed between a first portion (6a) of the second measuring element (6) and a second portion (6b) of the second measuring element (6); **characterised by**
- a voltage generation device (7) which is associated with the second measuring element (6), and which is designed to generate a first electrical voltage (U₁) and a second electrical voltage (U₂), optionally different from the first electrical voltage (U₁) and to apply said voltages to the second measuring element (6);
- a control device (8) which is associated with the voltage generation device (7) and is designed to control the operation of the voltage generation device (7) in such a way that the first and second electrical voltage (U₁, U₂) is applied alternately to the first and the second portion (6a, 6b) of the second measuring element (6).

2. Device according to claim 1, **characterised by** a measuring device (9) which is designed for measuring the electrical charge between the first and second measuring element (5, 6) during the alternating application of the first and second electrical voltage (U₁, U₂) to the first and the second portion (6a, 6b) of the second measuring element (6).

3. Device according to claim 2, **characterised by** an evaluation device (10) which is associated with the measuring device (9) and is designed for evaluating the measured electrical charge during the alternating application of the first and second electrical voltage (U1, U2) to the first and the second portion (6a, 6b) of the second measuring element (6), in respect of the filling level of the filling medium (2) in the filling volume (3).

4. Device according to any of the preceding claims, **characterised in that** the first measuring element (5) and the second measuring element (6) are arranged adjacently, wherein the first measuring element (5) and the second measuring element (6) form a capacitor assembly.

5. Device according to any of the preceding claims, **characterised in that** the first measuring element (5) is designed so as to be plate-like or plate-shaped, or tube-like or tube-shaped, and the second measuring element (6) is designed so as to be plate-like or plate-shaped, or rod-like or rod-shaped.

6. Device according to any of the preceding claims, **characterised in that** the second measuring element (6) is designed as a measuring resistor or comprises such.

7. Device according to claim 6, **characterised in that** the measuring resistor is designed as a resistor element which is arranged or formed so as to extend continuously along a longitudinal axis of the second measuring element (6), in particular on a substrate element (18) of the second measuring element (6).

8. Device according to claim 6, **characterised in that** the measuring resistor is formed by a plurality of discrete resistor elements arranged or formed along a longitudinal axis of the second measuring element (6) on a substrate element (18) of the second measuring element (6).

9. Device according to any of the preceding claims, **characterised in that** the second measuring element (6) comprises, at least in portions, in particular completely, an insulating coating (17) which is made of an insulating material and forms an electrical insulation of the second measuring element (6).

10. Device according to any of the preceding claims, **characterised in that** the first portion (6a) of the second measuring element (6) is formed in the region of a first free end of the second measuring element (6) or by a first free end of the second measuring element (6), and the second portion (6b) of the second measuring element (6) is formed in the region of a second free end of the second measuring element (6) or by a second free end of the second measuring element (6).

11. Device according to any of the preceding claims, **characterised in that** a first voltage application region of the second measuring element (6) is formed by or in the region of the first portion (6a) of the second measuring element (6), and a second voltage application region of the second measuring element (6) is formed by or in the region of the second portion (6b) of the second measuring element (6).

12. Measuring assembly (12) for capacitive measurement of a filling level of a filling medium (2) in a filling volume (3) which can be filled with a filling medium (2), comprising a device (1) according to any of the preceding claims.

13. Method for capacitive measurement of a filling level of a filling medium (2) in a filling volume (3) which can be filled with a filling medium (2), comprising the steps of:
- providing a first measuring element (5),
- providing a second measuring element (6), wherein the second measuring element (6) is formed such that a potential gradient is formed between a first portion (6a) of the second measuring element (6) and a second portion (6b) of the second measuring element (6);
- providing or generating a first electrical voltage (U₁) and a second electrical voltage (U₂), optionally different from the first electrical voltage (U₁);
- alternately applying the generated first and second electrical voltage (U₁, U₂) to the first and the second portion (6a, 6b) of the second measuring element (6),
- measuring the electrical charge between the first and second measuring element (5, 6) during the alternating application of the first and second electrical voltage (U₁, U₂) to the second measuring element (6),
- evaluating the measured electrical charge during the alternating application of the first and second electrical voltage (U₁, U₂) to the second measuring element (6), in respect of the filling level of the filling medium (2) in the filling volume (3).

14. Method according to claim 13, **characterised in that** the method is carried out using a device (1) according to any of claims 1 to 11.

## Revendications

1. Dispositif (1) de mesure capacitive d'un niveau de remplissage d'un milieu de remplissage (2) dans un volume de remplissage (3) pouvant être rempli d'un milieu de remplissage, comprenant :
- un premier élément de mesure (5),
- un deuxième élément de mesure (6) disposé, dans lequel le deuxième élément de mesure (6) est de telle nature qu'un gradient de potentiel s'établit entre une première section (6a) du deuxième élément de mesure (6) et une deuxième section (6b) du deuxième élément de mesure (6), **caractérisé par**
- un système de génération de tension (7) associé au deuxième élément de mesure (6), lequel est mis au point pour générer une première tension électrique (U₁) et une deuxième tension électrique (U₂) éventuellement différente de la première tension électrique (U₁) et pour l'appliquer sur le deuxième élément de mesure (6) ;
- un système de commande (8) associé au système de génération de tension (7), lequel est mis au point pour commander le fonctionnement du système de génération de tension (7) de telle manière que la première et la deuxième tension électrique (U₁, U₂) sont appliquées en alternance sur la première et la deuxième section (6a, 6b) du deuxième élément de mesure (6).

2. Dispositif selon la revendication 1, **caractérisé par** un système de mesure (9), lequel est mis au point pour mesurer la charge électrique entre le premier et le deuxième élément de mesure (5, 6) en présence de la première et de la deuxième tension électrique (U₁, U₂) appliquées en alternance sur la première et la deuxième section (6a, 6b) du deuxième élément de mesure (6).

3. Dispositif selon la revendication 2, **caractérisé par** un système d'évaluation (10) associé au système de mesure (9), lequel est mis au point pour évaluer la charge électrique mesurée en présence de la première et de la deuxième tension électrique (U₁, U₂) appliquées en alternance sur la première et la deuxième section (6a, 6b) du deuxième élément de mesure (6) eu égard au niveau de remplissage du milieu de remplissage (2) dans le volume de remplissage (3).

4. Dispositif selon l'une quelconque des revendications précédentes, **caractérisé en ce que** le premier élément de mesure (5) et le deuxième élément de mesure (6) sont disposés de manière adjacente, dans lequel le premier élément de mesure (5) et le deuxième élément de mesure (6) réalisent un ensemble condensateur.

5. Dispositif selon l'une quelconque des revendications précédentes, **caractérisé en ce que** le premier élément de mesure (5) est réalisé à la manière d'un panneau ou en forme de panneau ou à la manière d'un tube ou en forme de tube et le deuxième élément de mesure (6) est réalisé à la manière d'un panneau ou en forme de panneau ou à la manière d'une barre ou en forme de barre.

6. Dispositif selon l'une quelconque des revendications précédentes, **caractérisé en ce que** le deuxième élément de mesure (6) est réalisé en tant qu'une résistance de mesure ou comprend au moins un élément de ce type.

7. Dispositif selon la revendication 6, **caractérisé en ce que** la résistance de mesure est réalisée en tant qu'un élément de résistance disposé ou réalisé de manière à s'étendre en continu le long d'un axe longitudinal du deuxième élément de mesure (6), en particulier sur un élément de substrat (18) du deuxième élément de mesure (6).

8. Dispositif selon la revendication 6, **caractérisé en ce que** la résistance de mesure est réalisée par plusieurs éléments de résistance discrets disposés ou réalisés le long d'un axe longitudinal du deuxième élément de mesure (6) sur un élément de substrat (18) du deuxième élément de mesure (6).

9. Dispositif selon l'une quelconque des revendications précédentes, **caractérisé en ce que** le deuxième élément de mesure (6) présente au moins par endroits, en particulier en totalité, un revêtement d'isolation (17) composé d'un matériau d'isolation, formant une isolation électrique du deuxième élément de mesure (6).

10. Dispositif selon l'une quelconque des revendications précédentes, **caractérisé en ce que** la première section (6a) du deuxième élément de mesure (6) est formée dans la zone d'une première extrémité libre du deuxième élément de mesure (6) ou par une première extrémité libre du deuxième élément de mesure (6), et la deuxième section (6b) du deuxième élément de mesure (6) est formée dans la zone d'une deuxième extrémité libre du deuxième élément de mesure (6) ou par une deuxième extrémité libre du deuxième élément de mesure (6).

11. Dispositif selon l'une quelconque des revendications précédentes, **caractérisé en ce qu'**une première zone d'application de tension du deuxième élément de mesure (6) est réalisée par la ou dans la zone de la première section (6a) du deuxième élément de mesure (6) et une deuxième zone d'application de tension du deuxième élément de mesure (6) est réalisée par la ou dans la zone de la deuxième section (6b) du deuxième élément de mesure (6).

12. Module de mesure (12) de mesure capacitive d'un niveau de remplissage d'un milieu de remplissage (2) dans un volume de remplissage (3) pouvant être rempli avec un milieu de remplissage (2), comprenant un dispositif (1) selon l'une quelconque des revendications précédentes.

13. Procédé de mesure capacitive d'un niveau de remplissage d'un milieu de remplissage (2) dans un volume de remplissage (3) pouvant être rempli avec un agent de remplissage (2), comprenant les étapes :
- de fourniture d'un premier élément de mesure (5),
- de fourniture d'un deuxième élément de mesure (6), dans lequel le deuxième élément de mesure (6) est de telle nature qu'un gradient de potentiel s'établit entre une première section (6a) du deuxième élément de mesure (6) et une deuxième section (6b) du deuxième élément de mesure (6) ;
- de fourniture ou de génération d'une première tension électrique (U₁) et d'une deuxième tension électrique (U₂) éventuellement différente de la première tension électrique (U₁) ;
- d'application en alternance de la première et de la deuxième tension électrique (U₁, U₂) générée sur la première et la deuxième section (6a, 6b) du deuxième élément de mesure (6),
- de mesure de la charge électrique entre le premier et le deuxième élément de mesure (5, 6) pendant l'application en alternance de la première et de la deuxième tension électrique (U₁, U₂) sur le deuxième élément de mesure (6) ou en présence de la première et de la deuxième tension électrique (U₁, U₂) appliquées en alternance sur le deuxième élément de mesure,
- d'évaluation des charges électriques mesurées pendant l'application en alternance de la première et de la deuxième tension électrique (U₁, U₂) sur le deuxième élément de mesure (6) ou en présence de la première et de la deuxième tension électrique (U₁, U₂) appliquées en alternance sur le deuxième élément de mesure eu égard au niveau de remplissage du milieu de remplissage (2) dans le volume de remplissage (3).

14. Procédé selon la revendication 13, **caractérisé en ce que** le procédé est mis en oeuvre avec un dispositif (1) selon l'une quelconque des revendications 1 à 11.
